# EUROPÄISCHE PATENTSCHRIFT

(11) **EP 2 236 268 B1**
(45) Veröffentlichungstag und Bekanntmachung des Hinweises auf die Patenterteilung: **01.05.2013**
(21) Anmeldenummer: 10156578.6
(22) Anmeldetag: 16.03.2010
(51) Int. Cl.: B29C 49/42, B29C 49/78, B29C 49/06, B29C 49/12, B29C 49/36, B29C 49/48

(54) **Vorrichtung zum Umformen von Kunststoffvorformlingen zu Kunststoffbehältnissen mit Formaterkennung und Verfahren zum Formaterkennung**
Device for reforming plastic preforms into plastic containers with format recognition process for format recognition
Dispositif de déformation d'ébauches en plastique en conteneurs en plastique dotés d'une détection de format et procédé de détection de format

(30) Priorität: 02.04.2009 DE 102009015522
(43) Veröffentlichungstag der Anmeldung: 06.10.2010
(73) Patentinhaber: Krones AG, 93073 Neutraubling (DE)
(72) Erfinder: Lappe, Ulrich, 93059 Regensburg (DE)
(74) Vertreter: Bittner, Bernhard

(56) Entgegenhaltungen:
- EP-A1- 1 342 550
- WO-A2-2004/051857
- DE-A1- 10 361 782
- US-A1- 2005 194 705
- DATABASE WPI Week 200875 Thomson Scientific, London, GB; AN 2008-M74457 XP002653821, -& KR 100 831 368 B1 (P & S TECHNOLOGY CO LTD) 22. Mai 2008 (2008-05-22)
- DATABASE WPI Week 200031 Thomson Scientific, London, GB; AN 2000-358554 XP002653822, & JP 2000 117825 A (NISSEI ASB MACHINE CO LTD) 25. April 2000 (2000-04-25)

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit längerem bekannt. Dabei werden Kunststoffvorformlinge in Blasformen eingesetzt und mittels Zuführung von Druckluft zu Kunststoffflaschen expandiert. In Abhängigkeit von den einzelnen Vorformlingen und dem gewünschten Kunststoffbehältnis können dabei die Prozessparameter zum Umformen der Kunststoffvorformlinge in unterschiedlichster Weise gewählt werden. So werden üblicherweise die Kunststoffvorformlinge in bestimmten Abfolgen mit unterschiedlichen Drücken beaufschlagt. Diese Abfolgen hängen sowohl von den Vorformlingen selbst als auch von den jeweiligen Blasformen ab.

Seitens des Benutzers ist teilweise ein Garniturenwechsel gewünscht, d. h. die Umstellung von einem Flaschentyp auf einen anderen Flaschentyp. Zu diesem Zweck können beispielsweise die Blasformen ausgewechselt werden oder auch eine andere Gattung von Vorformlingen zugeführt werden. Falls jedoch die Prozessparameter nicht korrekt auf den Vorformling abgestimmt sind oder sich beispielsweise innerhalb einer Marge Vorformlinge ändern, kann dies zu unbefriedigenden Ergebnissen bei der Herstellung von Kunststoffflaschen führen.

Die DE 10 2007 025 521 A1 beschreibt eine Behandlungsmaschine für Flaschen, Dosen oder dergleichen Behälter. Dabei weist diese Behandlungsmaschine ein Identifizierungselement auf, welches einem während der Maschinenlebensdauer zumindest einmalig ersetzten Austauschteil zugeordnet ist. Auf diese Weise kann bei einem Austausch dieses Austauschteiles festgestellt werden, ob ein korrektes Nachbauteil eingebaut wurde. Diese Vorrichtung erlaubt jedoch keine Beeinflussung der Prozessparameter mit Abhängigkeit von bestimmten Blasformen oder Flaschentypen. Vielmehr dient diese Vorrichtung dazu, um Austauschteile, welche einem Verschleiß unterliegen, wie beispielsweise Einlaufschnecken, Geländerführungen oder auch Transportsterne durch korrekte Ersatzteile ersetzen zu können. Damit ist diese Vorrichtung insbesondere auf passive Elemente anwendbar und ermöglicht jedenfalls keinen Eingriff in Behandlungsprozesse.

Aus der DE 199 41 485 A1 ist eine Verpackungsmaschine, insbesondere zum Herstellen von Produkten enthaltenden Verpackungen, bekannt. Dabei wird vorgeschlagen, an formatabhängigen Bauteilen Identifikationscodes anzuordnen, die von Lesesensoren erfassbar sind. Auch in diesem Fall soll sichergestellt werden, dass die Maschine mit den korrekten Austauschteilen betrieben wird. Eine darüber hinausgehende Steuerung der Maschine ist jedoch auch hier nicht vorgesehen. Aus der US 2005/0194705 A1 ist ein Kunststoffformprozess und dessen Überwachung und Steuerung bekannt. Die DE 10361782 A1 beschreibt eine Vorrichtung zum Bearbeiten von Werkstücken. Dabei sind auf einem Tragrad wenistens zwei Bearbeitungsstationen angeordnet und das Tragrad weist ein Versorgungselement für ein Betriebsmittel auf, dass aus einer Drehkupplung und Anschlussleitungen ausgebildet ist. Die WO 2004/051857 A2 beschreibt eine Zähleinrichtung für ein Werkzeug mit sich bewegenden Hälften. Aus der KR 10831368 B1 ist ein Inspektionsgerät für Kunststoffvorformlinge bekannt. Die EP 1 342 550 A1 beschreibt ein Verfahren und eine Vorrichtung zum Vorhersagen von Temperaturprofilen von Kunststoffvorformlingen.
Die JP 200117825 A beschreibt ebenfalls eine Blasformmaschine.

Insbesondere Streckblasmaschinen werden heute mit so genannten Sortenparametem betrieben. Diese Sortenparameter werden einmal beim Einfahren einer Flasche mit einer spezifischen Preform ermittelt und danach wird die Summe der so gefundenen Prozessparameter als Rezept in der Maschinensteuerung hinterlegt. In der Produktion wird ab dann jeweils das passende Rezept ausgewählt. Beispiele für wesentliche Merkmale der Behältnisse sind unter anderem der Flaschentyp, der Preformtyp, eine gewünschte Ausbringung der Blasmaschine und dergleichen. In Abhängigkeit von dem gewünschten Flaschentyp müssen unterschiedliche Blasformen eingebaut werden. Die Preformtypen unterscheiden sich insbesondere hinsichtlich Ihrer Preformgeometrie, der Farbe und auch hinsichtlich des Materials. Die Auswahl eines jeweiligen Prozesses oder Rezepts erfolgt durch einen Maschinenfahrer.

Wenn jedoch ein falsches Rezept verwendet wird, kann dies zu Produktionsverlust oder späteren Reklamationen der hergestellten Flaschen führen, wenn nicht genügend genau auf die Flaschenqualität geachtet wird.

Der vorliegenden Erfindung liegt daher die Aufgabe zugrunde, die Herstellung von derartigen Kunststoffbehältnissen zu vereinfachen.

Daneben soll auch eine genaue Anpassung von Prozessparametern an unterschiedliche Kunststoffvorformlinge möglich sein. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Blasform auf, innerhalb derer Kunststoffvorformlinge unter Verwendung wenigstens eines gasförmigen Mediums zu den Kunststoffbehältnissen expandiert werden bzw. expandierbar sind. Dabei weist die Vorrichtung wenigstens eine Reckstange zum Dehnen der Kunststoffvorformlinge entlang deren Längsrichtung auf.

Erfindungsgemäß weist die Blasform wenigstens einen Informationsträger auf und die Vorrichtung wenigstens eine Informationsausleseeinheit zum Auslesen des Informationsträgers, wobei der Informationsträger derart gestaltet ist, dass durch eine Wechselwirkung zwischen dem Informationsträger und der Informationsausleseeinheit wenigstens eine für einen geometrischen Parameter des mit der Blasform umzuformenden Behältnisses charakteristische Eigenschaft ermittelbar ist. Bei der Wechselwirkung handelt es sich insbesondere um eine Wechselwirkung, welche die Übertragung oder Erkennung von Daten umfasst. Bevorzugt ist der Informationsträger beweglich gegenüber der Informationsausleseeinheit und besonders bevorzugt wird die Wechselwirkung ermöglicht, indem der Informationsträger in geometrische Nähe zu der Informationsausleseeinheit bewegt wird.

Vorzugsweise ist die Blasform von der Vorrichtung bzw. eine Blasstation dieser Vorrichtung austauschbar, d. h. es können unterschiedliche Blasformen eingesetzt werden. Durch den erfindungsgemäßen Informationsträger ist es im Gegensatz zum Stand der Technik nicht nur möglich, eine bestimmte Blasform zu identifizieren und zu überprüfen, ob ein korrektes Austauschteil eingesetzt wurde. Es ist hierüber hinaus auch möglich, direkt Informationen über die mit dieser Blasform herstellbaren Behälter zu ermitteln, um auf diese Weise in der Folge einen spezifischen Umformungsprozess auswählen zu können.

Damit weist bevorzugt die Vorrichtung auch eine Einrichtung für die automatische Identifikation des Flaschenformats einer dem Flaschenformat zugeordneten Form auf. Bereits in der Deutschen Patentanmeldung Nr. 102008030866.8, eingereicht am 30.06.2008 beim DPMA wurde eine Vorrichtung beschrieben, welche eine automatische Identifikation des Flaschenformats bzw. der dem Flaschenformat zugeordneten Blasform aufweist. In diesem Falle erfolgt jedoch diese Identifikation nicht über einen Informationsträger, sondern über das Messen einer Fluidmenge, die in den Vorformlingen eintritt, um auf diese Weise die Größe der entsprechenden Blasform zu ermitteln. Der Gegenstand dieser Anmeldung wird hiermit durch Bezugnahme vollständig auch zum Gegenstand der vorliegenden Anmeldung gemacht.

Bei einer vorteilhaften Ausführungsform ist der Informationsträger derart gestaltet, dass durch eine Wechselwirkung zwischen den Informationsträger und der Informationsausleseeinheit mehrere für die geometrischen Parameter des umzuformenden Behältnisses und/oder der Blasform charakteristische Eigenschaften ermittelbar sind. So kann es beispielsweise möglich sein, dass der Informationsträger Informationen über eine Höhe, über einen Querschnitt und dergleichen des herzustellenden Behälters aufweist, aber auch Informationen über eine Reckstange bzw. deren Bewegung oder auch über Betriebsstunden der jeweiligen Blasform.

Bei einer weiteren vorteilhaften Ausführungsform ist die charakteristische Eigenschaft durch eine berührungslose Wechselwirkung zwischen dem Informationsträger und der Informationsausleseeinheit ermittelbar. Auf diese Weise ist es möglich, dass die Informationsausleseeinheit beispielsweise an der Maschine selbst angeordnet ist und die Blasform sich gegenüber dieser Informationsausleseeinheit bewegt. Vorteilhaft wird die Blasform an einem Träger geführt und auf diese Weise beispielsweise entlang einer kreisförmigen Bahn bewegt. Die Informationsausleseeinheit kann in der Folge während der Vorbeibewegung Informationsträgers diese charakteristischen Informationen auslesen.

Bei einer weiteren vorteilhaften Ausführungsform weist die Vorrichtung eine Steuerungseinrichtung auf, welche die Vorrichtung in Abhängigkeit von dem wenigstens einen geometrischen Parameter steuert. Dies bedeutet, dass vorteilhaft nicht nur eine Vielzahl von Parametern für die herzustellenden Behältnisse ermittelt werden, sondern die Maschine auf Basis dieser ermittelten Werte den Umformungsprozess steuert.

Vorteilhaft ist wenigstens einer der charakteristischen Eigenschaften ausgewählt aus einer Gruppe von Eigenschaften, welche ein Behältervolumen, ein Reckmaß, einen Umformungsprozess, eine auf die Blasform angepasste ideale Behältnisgeometrie, eine Farbe der Kunststoffvorformlinge, einen Durchmesser der Kunststoffvorformlinge insbesondere in einem Bereich unterhalb des Tragrings, ein Gewicht der Blasform, eine Querschnittsfläche der Blasform, eine Angabe über Betriebsstunden und/oder Kombinationen hieraus, enthält.

Daneben kann auch die Information enthalten sein, ob Maßnahmen zur Kühlung des Flaschenhalses (Neckkühlung) getroffen sind. Die Querschnittsfläche der Blasform ist insbesondere bedeutsam für die Druckbeaufschlagung während des Umformungsprozesses. Somit sind auch bei dieser Ausführungsform sämtliche Blasformen mit Informationsträgern versehen. Bei diesem Informationsträger kann es sich vorteilhaft um einen RFID-Chip handeln. In diesem Falle sind demnach die Blasformen gechipt, und auf diesen Chip sind die oben erwähnten wesentlichen Informationen gespeichert, die diese jeweilige Form betreffen. Dabei kann dieser Chip durch einen Empfänger in der Formaufhängung der Maschine schnurlos oder ggf. auch durch ein Kabelverbindung, die gesteckt werden muss, ausgelesen werden. Diese Informationen können dann der Maschinensteuerung zur Verfügung gestellt werden, und ggf. kann die Maschinensteuerung Informationen auf diesem Chip speichern, wie beispielsweise eine Betriebsstundendifferenz zwischen dem Einbau und dem Ausbau der Blasform.

Es wäre jedoch auch möglich, dass der Informationsträger beispielsweise ein Strichcode ist. In diesem Falle wird eine Informationsausleseeinheit, wie ein Codescanner, diesen Strichcode auslesen und Informationen über diesen Strichcode an die Maschinensteuerung weitergeben.

Die Maschinensteuerung ordnet einem speziellen Strichcode in der Folge spezifische Parameter zu, welche sich wiederum auf die Behältergeometrie und/oder die Blasform beziehen. In diesem Falle ist damit die Information nicht auf den Strichcode selbst gespeichert, sondern ergibt sich, wie an sich aus dem Stand der Technik bekannt, aus der Anordnung der einzelnen Striche auf diesem Strichcode. Die Wechselwirkung besteht in diesem Fall zumindest aus dem Abscannen des Strichcodes ggfs. jedoch auch aus der Beleuchtung desselben.

Bei einer weiteren vorteilhaften Ausführungsform weist die Vorrichtung eine Sensoreinrichtung auf, welche wenigstens einen für die umzuformenden Vorformlinge charakteristischen Kennwert erfasst. Bei dieser Ausführungsform wählt vorzugsweise nicht der Bediener nicht ein bestimmtes Behandlungsrezept aus, sondern die Maschine selbst. Der Bediener lässt die Maschine lediglich die jeweilige Vorform, die ungeformt werden soll, erkennen. Genauer gesagt, wird hier die Maschine mit einer entsprechenden Sensortechnik ausgestattet, welche die Geometrie des Vorformlings genügend genau erfassen kann, beispielsweise mittels einer CCD-Kamera mit Bilderkennung. Weiterhin kann die Sensoreinrichtung Eigenschaften des Vorformlings, wie dessen Farbe oder dessen Infrarottransmissionsspektrum, erkennen. Aus diesem Transmissionsspektrum können Rückschlüsse auf das Aufheizverhalten des Kunststoffvorformlings gezogen werden und auf diese Weise kann auf dem Materialcharge geschlossen werden.

Damit ist dieser besagte Kennwert vorzugsweise aus einer Gruppe von Kennwerten ausgewählt, welche eine geometrische Gestalt der Vorformlinge, eine Farbe der Vorformlinge, einen Transmissionkoeffizienten, insbesondere für infrarotes Licht, Kombinationen hieraus und dergleichen enthält.

Bei einer weiteren vorteilhaften Ausführungsform weist die Vorrichtung eine Zuordnungseinrichtung auf, welche einem vorgegebenen Vorformlingstyp und einer vorgegebenen Blasform einen bestimmten Expansionsprozess zuordnet. Damit ist die Vorrichtung zusätzlich mit einem System ausgestattet, welches die in die Maschine eingehängte Blasform erkennt, beispielsweise über den Transponder oder ein Kabel. Auf diese Weise ist der Maschine bekannt, welches Kunststoffbehältnis hergestellt werden soll.

So ist es weiterhin möglich, dass aus der Maschinensteuerung die bereits eingefahrenen "Umformrezepte" bekannt sind und die Maschine nun entscheiden kann, ob eine bereits eingelernte Vorformling-Flaschenkombination gefahren werden soll oder eine neue Rezeptfindung erforderlich ist.

Bevorzugt weist die Vorrichtung eine Speichereinheit auf, in der eine Vielzahl von Vorformlingstypen und Blasformen eine Vielzahl von unterschiedlichen Prozessabläufen zum Umformen der Kunststoffbehältnisse zugeordnet ist. Damit kann aus Kenntnis einer bestimmten Blasform und eines bestimmten Kunststoffvorformlings ein genau vorbestimmter Prozessablauf ausgewählt und verwendet werden. Auf diese Weise wird sichergestellt, dass bei bekannten Vorformlingen und Prozessen jeweils ein idealer Prozessablauf für den entsprechenden Kunststoffvorformling gewählt wird. Daneben kann es jedoch auch möglich sein, dass der Benutzer darüber hinaus weitere Angaben manuell eingeben kann, um gleichwohl unter Zugrundelegung idealer Prozessbedingungen unterschiedliche Kunststoffbehältnisse herstellen zu können.

Falls, wie oben erwähnt, eine bereits eingelernte Kunststoffvorformling / Flaschenkombination gefahren werden soll, wird in diesem Fall das beste zur Verfügung stehende Programm geladen und in den oben genannten Fall, dass eine neue Rezeptfindung erforderlich ist, kann beispielsweise dem Benutzer angezeigt werden, dass diese vor der eigentlichen Herstellung erfolgen muss.

Weiterhin ist es möglich, zu überprüfen, ob der zu behandelnde Kunststoffvorformling geometrisch zu der jeweiligen Blasform kompatibel ist, was beispielsweise nicht der Fall ist, wenn der Durchmesser unter dem Tragring zu groß ist oder der Kunststoffvorformling zu lang für die gewünschte Flasche ist oder auch zu starke Abweichungen von dem idealen Kunststoffvorformling aufweist.

Bei einer weiteren vorteilhaften Ausführungsform weist der Informationsträger eine Speichereinrichtung zum Speichern von Informationen auf. Vorzugsweise ist dieser Speicher veränderbar, so dass auch bestimmte Prozessdaten geändert werden können, wie beispielsweise eine Angabe über die bereits vorliegenden Betriebsstunden der jeweiligen Blasform.

Vorzugsweise weist die Vorrichtung eine Prozessoreinheit auf, welche auf Grundlage von zu einem expandierenden Kunststoffvorformling charakteristischen Daten und auf Grundlage von charakteristischen Daten der Blasform einen Umformungsprozess ableitet.

Sind beispielsweise alle Parameter über die Form und dem Vorformling bekannt, sowie zusätzlich die Informationen, die ein erfahrener Anwender zum Einstellen des Prozesses benötigt, wobei diese Parameter beispielsweise aus der Maschinensteuerung bekannt sein können. So ist es weiterhin möglich, ein Programm zu hinterlegen, welches in einem ersten Schritt eine Annäherung bzw. einen "Best Guess" für einen Prozess vorschlägt, der dann noch weiter optimiert werden kann. Dieser erste Schritt bzw. diese erste Annäherung kann dabei schon zur Herstellung einer akzeptablen Flaschenqualität führen. Weiterhin wäre es möglich, dass eine Regelung bzw. eine geschlossene Regelschleife vorgesehen ist, welche durch Erfahrungswerte diese ersten Einschätzungen bzw. "Best Guess" Ansätze noch verbessert. So ist es beispielsweise auch möglich, dass der Vorformling vermessen wird und die Parameter auf diese Weise ermittelt werden und anschließend ein Regelkreis durch Vermessung bereits fertiger Flaschen wiederum die Prozesse anpasst. Weiterhin wäre es auch bei einem derartigen Verfahren denkbar, dass sich die Vorrichtung selbst einen ideal geeigneten Vorformling auswählt.

Vorzugsweise weist die Vorrichtung eine Vielzahl von Blasformen auf, wobei vorzugsweise jede dieser Blasformen mit einem entsprechenden Informationsträger ausgestattet ist. Weiterhin wäre es auch möglich, dass mehrere Informationsausleseeinheiten vorgesehen sind, es wäre jedoch auch möglich, dass lediglich eine Informationsausleseeinheit vorhanden ist. Weiterhin kann der Informationsträger eine Identifikationsnummer aufweisen, welche diese bestimmte Blasform eindeutig identifiziert.

Die vorliegende Erfindung ist weiterhin auf ein Blasform für eine Vorrichtung der oben beschriebenen Art gerichtet, wobei innerhalb der Blasform Kunststoffvorformlinge unter Verwendung wenigstens eines gasförmigen Mediums zu Kunststoffbehältnissen expandierbar sind und die Vorrichtung bevorzugt wenigstens eine Reckstange zum Dehnen der Kunststoffvorformlinge entlang deren Längsrichtung aufweist. Erfindungsgemäß weißt die Blasform wenigstens einen von einer Informationsausleseeinheit auslesbaren Informationsträger auf, wobei dieser Informationsträger derart gestaltet ist, dass es durch eine Wechselwirkung zwischen dem Informationsträger und der Informationsausleseeinheit wenigstens eine für einen geometrischen Parameter des mit der Blasform umzuformenden Behältnisses charakteristische Eigenschaften ermittelbar ist.

Die vorliegende Erfindung ist weiterhin auf ein Verfahren zum Umformen von Kunststoffbehältnissen gerichtet. Dabei werden in einem ersten Verfahrensschritt Kunststoffvorformlinge in eine Blasform zugeführt. Anschließend werden die Kunststoffvorformlinge innerhalb der Blasform unter Verwendung vorgegebener Prozessparameter und unter Verwendung eines gasförmigen Mediums zu Kunststoffbehältnissen expandiert. In einem weiteren Verfahrensschritt werden die umgeformten Kunststoffbehältnisse aus der Blasform entnommen.

Erfindungsgemäß wird durch Auslesen eines Informationsträgers der Blasform wenigstens eine für einen geometrischen Parameter des mit der Blasform umzuformenden Behältnisses charakteristische Eigenschaft ermittelt. Daneben ist es auch möglich, charakteristische Eigenschaften der Blasform selbst zu ermitteln.

Vorzugsweise werden auf Basis dieser charakteristischen Eigenschaften die Prozessparameter gesteuert. Bei diesen Prozessparametern kann es sich um Luftdrücke zum Umformen der Kunststoffvorformlinge handeln, um verschiedene Druckabfolgen, um Temperaturen und dergleichen.

Weitere Vorteile und Ausführungsformen ergeben sich aus den beigefügten Figuren:

Darin zeigen:
- Fig. 1: Eine grobschematische Darstellung einer erfindungsgemäßen Vorrichtung;
- Fig. 2: eine Darstellung einer erfindungsgemäßen Blasform; und
- Fig. 3: eine weitere Darstellung einer erfindungsgemäßen Blasform;

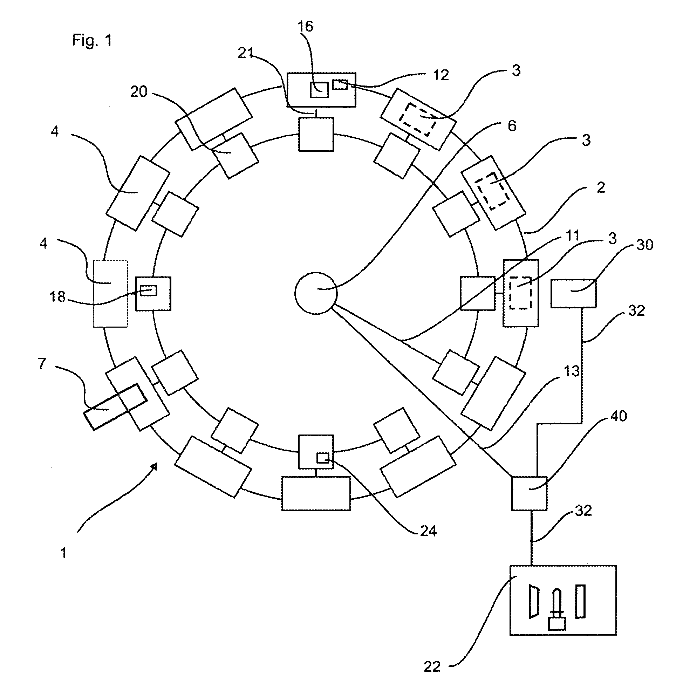

Fig. 1 zeigt grob schematisch eine erfindungsgemäße Vorrichtung 1 zum Erzeugen von Kunststoffbehältnissen. Diese Vorrichtung weist eine (nur schematisch gezeigte) Transporteinrichtung 2 in Form eines Blasrads auf, wobei an diesem Blasrad eine Vielzahl von Blasstationen 4 zum Expandieren von Vorformlingen angeordnet ist. Das Bezugszeichen 20 bezieht sich auf Steuerungseinrichtungen bzw. Servoumrichter, die jeder einzelnen Blasstation 4 zugeordnet sind. Diese einzelnen Steuereinrichtungen 20 sind damit (drehend) auf dem Blasrad 2 angeordnet. Die Energieversorgung dieser Steuerungseinrichtungen erfolgt über einen mit dem Bezugszeichen 6 gekennzeichneten Schleifring und über Verbindungsleitungen 11.

Jede einzelne Blasstation 4 weist eine Antriebseinrichtung 16 für eine (nicht gezeigte) Reckstange sowie eine Vielzahl von Ventilen 12 auf, welche den eigentlichen Blasvorgang steuern. Auch die elektrische Versorgung dieser Antriebseinrichtungen kann über den Schleifring 6 erfolgen. Weiterhin weist jede einzelne Blasstation eine nur schematisch angedeutete Blasform 3 auf, innerhalb derer die Kunststoffvorformlinge zu Kunststoffbehältnissen expandiert werden.

Daneben weist jede Blasstation eine und bevorzugt mehrere Sensoreinrichtungen 22 auf, welche ebenfalls bevorzugt in Kommunikationsverbindung mit der jeweiligen Steuereinrichtung 20 stehen. Weiterhin weist jede Blasstation bzw. deren Steuerungseinrichtung 20 einen Zeitgeber 24 auf, der in Abhängigkeit von einem Startsignal den betreffenden Blasvorgang steuert. Das Bezugszeichen 30 bezieht sich auf einen Positionssensor, der eine Winkelposition des Blasrads erfasst. Diese Winkelinformation wird einer zentralen Steuereinrichtung 40, die stehend vorgesehen ist, über eine Kommunikationsverbindung 32 weitergeleitet.

Weiterhin können (nicht dargestellte) Sensoreinrichtungen vorgesehen sein, welche die ankommenden Vorformlinge hinsichtlich ihrer physikalischen Eigenschaften untersuchen. Auf Grundlage dieser Eigenschaften kann der Umformungsprozess gesteuert werden.

Über eine Kommunikationsverbindung 13 wird über den Schleifring 6 eine entsprechende Zeitinformation sowie ein Starttriggersignal an die Steuereinrichtungen 20 weitergegeben. Weiterhin wird in Abhängigkeit von der von dem Positionssensor 30 ermittelten Position des Blasrads festgestellt, welche der einzelnen Blasstationen 4 gerade einen Vorformling übernommen hat. An diese entsprechende Blasstation wird ein Startsignal gesendet und in Abhängigkeit von diesem Startsignal wird der Expansionsvorgang der Behältnisse eingeleitet.

Das Bezugszeichen 18 bezieht sich auf eine Speichereinrichtung. Jede der einzelnen Steuereinrichtungen weist hier eine Speichereinrichtung 18 auf. In dieser Speichereinrichtung können beispielsweise Daten abgelegt sein, welche den zeitlichen Ablauf der Ventilsteuerung oder auch der Reckstangenbewegung regeln. Daneben können auch Sollwerte abgelegt sein, die mit von den Sensoreinrichtungen 22 ausgegebenen Messwerten verglichen werden können. Die Steuereinrichtungen 20 kommunizieren jeweils über Verbindungsleitungen 21 mit den Blasstationen.

Die Vorformlinge können dabei vor dem eigentlichen Expansionsvorgang in einer separaten Messeinrichtung bzw. mittels der Sensoreinrichtung 22 vermessen werden. Daneben wäre es auch möglich, dass diese Messeinrichtung beispielsweise an einer Zuführschiene angeordnet ist, um dort die Vorformlinge bzw. Preforms zu vermessen.

In dieser Speichereinrichtung oder weiteren Speichereinrichtungen können auch spezifische Daten für bestimmte Blasformen, Vorformlinge oder herzustellende Behältnisse angeordnet sein.

Das Bezugszeichen 7 bezieht sich auf eine ebenfalls nur schematisch angedeutete Informationsausleseeinheit. Dabei kann diese Informationsausleseeinheit beispielsweise stationär an einem Maschinengestell der Vorrichtung 1 angeordnet sein. Einerseits ist es möglich, dass nur eine oder wenige derartiger Informationsausleseeinheiten vorgesehen sind, es wäre jedoch auch möglich, dass die Anzahl dieser Informationsausleseeinheiten mit der Anzahl der Blasstationen übereinstimmt.

Die Informationsausleseeinheit 7 kann dabei beispielsweise oberhalb der einzelnen Blasstationen 4 vorgesehen sein, um so die Informationen von einem in einem Deckelbereich der Blasform angeordneten Informationsträger auslesen zu können.

So wäre es auch möglich, dass eine Oberfläche der Vorformlinge mit Hilfe von Lichtschranken bestimmt wird. Daneben kann auch ein Sensor zu Messung bzw. Bestimmung des Druckkissens der Blasformen vorgesehen sein. Auch könnte ein Wegsensor vorgesehen sein, der den Weg eines derartigen Druckkissens der Blasform bestimmt.

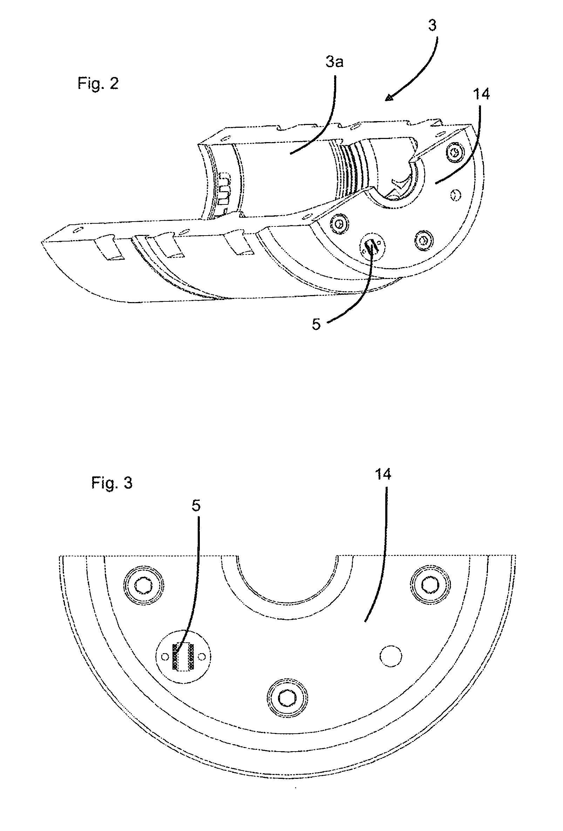

Fig. 2 zeigt eine Teilansicht einer erfindungsgemäßen Blasform, genauer gesagt eine Hälfte der Blasform 3. Diese Blasform weist in ihrem Inneren einen Hohlraum 3a auf, innerhalb dessen der Vorformling zu einem Kunststoffbehältnis expandiert wird. In diesem Falle weist die Blasform 3 an einem Deckel 14 einen Informationsträger 5 auf, der hier beispielsweise als RFID-Chip ausgestaltet sein kann. Dieser Informationsträger 5 ist dabei fest mit der besagten Blasformhälfte verbunden. Vorzugsweise ist der Chip derart gestaltet, dass eine Ablösung desselben von der Blasform 3 zu dessen Zerstörung führen würde. Dieser Informationsträger 5 kann von der in Fig. 1 nur schematisch dargestellten Informationsausleseeinheit 7 ausgelesen werden, so dass Informationen über die betreffende Blasform 3 gewonnen werden können.

Fig. 3 zeigt eine weitere Darstellung einer erfindungsgemäßen Blasform, die mit einem derartigen Informationsträger 5 ausgestaltet ist. Es wären dabei auch Ausführungsformen denkbar, bei denen zwei Blasformhälften vorgesehen sind, die auseinandergeklappt werden, wobei eine dieser Blasformhälften dabei nicht geschwenkt wird und die andere dieser gegenüber geschwenkt wird. Vorzugsweise ist dann der Informationsträger auf derjenigen Blasformhälfte angeordnet, welche nicht geschwenkt wird, so dass er sich unabhängig von einer Öffnungs- oder Schließstellung der Blasform stets im gleichen radialen Abstand bezüglich des Trägers 2 befindet.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

| | |
|---|---|
| 1 | Vorrichtung |
| 2 | Transporteinrichtung, Blasrad |
| 3 | Blasform |
| 3a | Hohlraum |
| 4 | Blasstation |
| 5 | Informationsträger |
| 6 | Schleifring |
| 7 | Informationsausleseeinheit |
| 11 | Verbindungsleitungen |
| 12 | Ventile |
| 13 | Kommunikationsverbindung |
| 14 | Deckel |
| 16 | Antriebseinrichtung |
| 18 | Speichereinrichtung |
| 20 | Steuerungseinrichtungen bzw. Servoumrichter, |
| 21 | Verbindungsleitung |
| 22 | Sensoreinrichtung |
| 24 | Zeitgeber |
| 30 | Positionsgeber |
| 32 | Kommunikationsverbindung |
| 40 | Steuereinrichtung |
| L | Längsrichtung |

## Patentansprüche

1. Vorrichtung zum Umformen von Kunststoffvorformlingen zu Kunststoffbehältnissen mit wenigstens einer Blasform (3) innerhalb derer Kunststoffvorformlinge unter Verwendung wenigstens eines gasförmigen Mediums zu den Kunststoffbehältnissen expandierbar sind, wobei die Vorrichtung wenigstens eine Reckstange zum Dehnen der Kunststoffvorformlinge entlang deren Längsrichtung (L) aufweist, wobei die Blasform (3) wenigstens einen Informationsträger (5) aufweist, und die Vorrichtung wenigstens eine Informationsausleseeinheit (7) zum Auslesen des Informationsträgers (5) aufweist, wobei der Informationsträger (5) derart gestaltet ist, dass durch eine Wechselwirkung zwischen dem Informationsträger (5) und der Informationsausleseeinheit (7) wenigstens eine für einen geometrischen Parameter des mit der Blasform (3) umzuformenden Behältnisses charakteristische Eigenschaft ermittelbar ist,
**dadurch gekennzeichnet, dass**
die Vorrichtung wenigstens eine Sensoreinrichtung (22) aufweist, welche wenigstens einen für die umzuformenden Vorformlinge charakteristischen Kennwert erfasst und wobei die Vorrichtung eine Speichereinheit aufweist, in der einer Vielzahl von Vorformlingstypen und Blasformen (3) eine Vielzahl von unterschiedlichen Prozessabläufen zum Umformen der Kunststoffbehältnisse zugeordnet ist, damit aus Kenntnis einer bestimmten Blasform und eines bestimmten Kunststoffvorformlings ein genau bestimmter Prozessablauf ausgewählt und verwendet werden kann.

2. Vorrichtung nach Anspruch 1,
**dadurch gekennzeichnet, dass**
der Informationsträger (5) derart gestaltet ist, dass durch eine Wechselwirkung zwischen dem Informationsträger (5) und der Informationsausleseeinheit (7) mehrere für die geometrischen Parameter des umzuformenden Behältnisses und/oder der Blasform charakteristische Eigenschaften ermittelbar sind.

3. Vorrichtung nach Anspruch 1,
**dadurch gekennzeichnet, dass**
die charakteristische Eigenschaft durch eine berührungslose Wechselwirkung zwischen dem Informationsträger (5) und der Informationsausleseeinheit (7) ermittelbar ist.

4. Vorrichtung nach wenigstens einem der vorangegangenen Ansprüche,
**dadurch gekennzeichnet, dass**
die Vorrichtung eine Steuerungseinrichtung (20) aufweist, welche die Vorrichtung in Abhängigkeit von dem wenigstens einen geometrischen Parameter steuert.

5. Vorrichtung nach wenigstens einem der vorangegangenen Ansprüche,
**dadurch gekennzeichnet, dass**
wenigstens eine charakteristische Eigenschaft aus einer Gruppe von Eigenschaften ausgewählt Ist, welche ein Behältervolumen, ein Reckmaß, einen Umformungsprozess, eine auf die Blasform angepasste ideale Behältnisgeometrie, eine Farbe der Kunststoffvorformlinge, einen Durchmesser der Kunststoffvorformlinge, ein Gewicht der Blasform, eine Querschnittsfläche der Blasform, eine Angabe über Betriebsstunden, Kombinationen hieraus und dergleichen enthält.

6. Vorrichtung nach wenigstens einem der vorangegangenen Ansprüche,
**dadurch gekennzeichnet, dass**
der Informationsträger (5) ein RFID - Chip ist.

7. Vorrichtung nach wenigstens einem der vorangegangenen Ansprüche,
**dadurch gekennzeichnet, dass**
der Informationsträger (5) ein Strichcode ist.

8. Vorrichtung nach Anspruch 1,
**dadurch gekennzeichnet, dass**
der Kennwert aus einer Gruppe von Kennwerten ausgewählt ist, welche eine geometrische Gestalt der Vorformlinge, eine Farbe der Vorformlinge, einen Transmissionskoeffizienten, insbesondere für infrarotes Licht, Kombinationen hieraus und dergleichen enthält.

9. Vorrichtung nach wenigstens einem der vorangegangenen Ansprüche,
**dadurch gekennzeichnet, dass**
die Vorrichtung eine Zuordnungseinrichtung aufweist, welche einem vorgegebenen Vorformlingstyp und einer vorgegebenen Blasform einen bestimmten Expansionsprozess zuordnet.

10. Vorrichtung nach wenigstens einem der vorangegangenen Ansprüche,
**dadurch gekennzeichnet, dass**
der Informationsträger (5) eine Speichereinrichtung zum Speichern von Informationen aufweist.

11. Vorrichtung nach wenigstens einem der vorangegangenen Ansprüche,
**dadurch gekennzeichnet, dass**
die Vorrichtung eine Prozessoreinheit aufweist, welche auf Grundlage von für einen zu expandieremden Kunststoffvorformling charakteristischen Daten und auf Grundlage von charakteristischen Daten der Blasform (3) einen Umformungsprozess ableitet.

12. Verfahren zum Umformen von Kunststoffbehältnissen mit den Schritten:
- zuführen eines Kunststoffvorformlings in eine Blasform;
- Expandieren des Kunststoffvorformlings innerhalb der Blasform unter Verwendung vorgegebener Prozessparameter;
- Entnahme des umgeformten Kunststoffbehältnisses aus der Blasform;
wobei durch Auslesen eines Informationsträgers der Blasform wenigstens eine für einen geometrischen Parameter des mit der Blasform umzuformenden Behältnisses charakteristische Eigenschaft ermittelt wird,
**dadurch gekennzeichnet, dass**
mittels wenigstens einer Sensoreinrichtung (22) wenigstens ein für die umzuformenden Vorformlinge charakteristischer Kennwert erfasst wird und mittels einer Speichereinheit einer Vielzahl von Vorformlingstypen und Blasformen (3) eine Vielzahl von unterschiedlichen Prozessabläufen zum Umformen der Kunststoffbehältnisse zugeordnet wird, damit aus Kenntnis einer bestimmten Blasform und eines bestimmten Kunststoffvorformlings ein genau bestimmter Prozessablauf ausgewählt und verwendet werden kann.

## Claims

1. An apparatus for shaping plastics material pre-forms into plastics material containers with at least one blow mould (3), inside which plastics material pre-forms are capable of being expanded to form the plastics material containers whilst using at least one gaseous medium, wherein the apparatus has at least one stretch bar for extending the plastics material pre-forms along their longitudinal direction (L), wherein the blow mould (3) has at least one information carrier (5), and the apparatus has at least one information read-out unit (7) for reading out the information carrier (5), wherein the information carrier (5) is designed in such a way that at least one property characteristic of a geometrical parameter of the container to be shaped by the blow mould (3) is capable of being determined by an interaction between the information carrier (5) and the information read-out unit (7), **characterized in that** the apparatus has at least one sensor device (22) which detects at least one specific value characteristic of the pre-forms to be shaped, and wherein the apparatus has a memory unit in which a multiplicity of different process sequences for shaping the plastics material containers are allocated to a multiplicity of pre-form types and blow moulds (3) so that a precisely determined process sequence can be selected from the knowledge of a specific blow mould and a specific plastics material pre-form and can be used.

2. An apparatus according to claim 1, **characterized in that** the information carrier (5) is designed in such a way that a multiplicity of properties characteristic of the geometrical parameters of the container to be shaped and/or the blow mould is capable of being determined by an interaction between the information carrier (5) and the information read-out unit (7).

3. An apparatus according to claim 1, **characterized in that** the characteristic property is capable of being determined by an interaction without contact between the information carrier (5) and the information read-out unit (7).

4. An apparatus according to at least one of the preceding claims, **characterized in that** the apparatus has a control device (20) which controls the apparatus in a manner dependent upon the at least one geometrical parameter.

5. An apparatus according to at least one of the preceding claims, **characterized in that** at least one characteristic property is selected from a group of properties which contains a container volume, a stretching dimension, a shaping process, an ideal container geometry adapted to the blow mould, a colour of the plastics material pre-forms, a diameter of the plastics material pre-forms, a weight of the blow mould, a cross-sectional area of the blow mould, an indication of the operating hours, combinations thereof and the like.

6. An apparatus according to at least one of the preceding claims, **characterized in that** the information carrier (5) is an RFID chip.

7. An apparatus according to at least one of the preceding claims, **characterized in that** the information carrier (5) is a bar code.

8. An apparatus according to claim 1, **characterized in that** the specific value is selected from a group of specific values which contains a geometrical shape of the pre-forms, a colour of the pre-forms, a transmission coefficient, in particular for infrared light, combinations thereof and the like.

9. An apparatus according to at least one of the preceding claims, **characterized in that** the apparatus has an allocation device which allocates a specified expansion process to a pre-set pre-form type and a pre-set blow mould.

10. An apparatus according to at least one of the preceding claims, **characterized in that** the information carrier (5) has a memory device for storing information.

11. An apparatus according to at least one of the preceding claims, **characterized in that** the apparatus has a processor unit which derives a shaping process on the basis of data characteristic of a plastics material pre-form to be expanded and on the basis of characteristic data of the blow mould (3).

12. A method of shaping plastics material containers with the steps:
- feeding a plastics material pre-form into a blow mould;
- expanding the plastics material pre-form inside the blow mould whilst using pre-set process parameters;
- removing the shaped plastics material container from the blow mould,
wherein at least one property characteristic of a geometrical parameter of the container to be shaped by the blow mould is determined by reading out an information carrier of the blow mould,
**characterized in that** at least one specific value characteristic of the pre-forms to be shaped is detected by means of at least one sensor device (22) and a multiplicity of different process sequences for shaping the plastics material containers are allocated to a multiplicity of pre-form types and blow moulds (3) by means of a memory unit so that a precisely determined process sequence can be selected from the knowledge of a specific blow mould and a specific plastics material pre-form and can be used.

## Revendications

1. Installation pour la transformation de préformes en matière plastique en récipients en matière plastique, avec au moins un moule de soufflage (3) à l'intérieur duquel des préformes en matière plastique peuvent être expansées en utilisant au moins un fluide gazeux pour obtenir des récipients en matière plastique, ladite installation comportant au moins une barre d'étirage pour étirer les préformes en matière plastique dans leur direction longitudinale (L), le moule de soufflage (3) comportant au moins un support d'information (5), et l'installation au moins une unité d'extraction d'information (7) pour la lecture du support d'information (5), le support d'information (5) étant réalisé de manière à permettre la détermination d'au moins une propriété caractéristique pour un paramètre géométrique du récipient à transformer avec le moule de soufflage (3), par une interaction entre le support d'information (5) et l'unité d'extraction d'information (7),
**caractérisée en ce que**
ladite installation comporte au moins un dispositif de capteur (22), lequel détecte au moins une valeur caractéristique pour les préformes à transformer, et **en ce que** ladite installation comporte une unité de mémoire où une pluralité de processus différenciés pour la transformation des récipients en matière plastique est associée à une pluralité de types de préformes et de moules de soufflage (3), pour que la connaissance d'un moule défini et d'une préforme en matière plastique définie permette la sélection et l'utilisation d'un processus exactement défini.

2. Installation selon la revendication 1,
**caractérisée en ce que**
le support d'information (5) est réalisé de manière à permettre la détermination de plusieurs propriétés caractéristiques pour les paramètres géométriques du récipient à transformer et/ou du moule de soufflage, par une interaction entre le support d'information (5) et l'unité d'extraction d'information (7).

3. Installation selon la revendication 1,
**caractérisée en ce que**
la propriété caractéristique peut être déterminée par une interaction entre le support d'information (5) et l'unité d'extraction d'information (7).

4. Installation selon au moins une des revendications précédentes,
**caractérisée en ce que**
ladite installation comporte un dispositif de commande (20), lequel commande ladite installation en fonction du ou des paramètres géométriques.

5. Installation selon au moins une des revendications précédentes,
**caractérisée en ce que**
au moins une propriété caractéristique est sélectionnée dans un groupe de propriétés, lequel comprend un volume de récipient, une cote d'étirage, un processus de transformation, une géométrie de récipient idéale ajustée au moule de soufflage, une couleur des préformes en matière plastique, un diamètre des préformes en matière plastique, un poids du moule de soufflage, une surface de section transversale du moule de soufflage, une indication des heures de service, des combinaisons desdites propriétés et similaires.

6. Installation selon au moins une des revendications précédentes,
**caractérisée en ce que**
le support d'information (5) est une puce RFID.

7. Installation selon au moins une des revendications précédentes,
**caractérisée en ce que**
le support d'information (5) est un code-barres.

8. Installation selon la revendication 1,
**caractérisée en ce que**
la valeur caractéristique est sélectionnée dans un groupe de valeurs caractéristiques, lequel comprend une forme géométrique des préformes, une couleur des préformes, un coefficient de transmission, en particulier pour la lumière infrarouge, des combinaisons desdites valeurs caractéristiques et similaires.

9. Installation selon au moins une des revendications précédentes,
**caractérisée en ce que**
ladite installation comporte un dispositif d'association, lequel associe un processus d'expansion défini à un type de préforme défini et à un moule de soufflage défini.

10. Installation selon au moins une des revendications précédentes,
**caractérisée en ce que**
le support d'information (5) comporte un dispositif de mémorisation pour la sauvegarde d'informations.

11. Installation selon au moins une des revendications précédentes,
**caractérisée en ce que**
ladite installation comporte une unité de processeur, laquelle déduit un processus de transformation sur la base de données caractéristiques pour une préforme en matière plastique à expanser et sur la base de données caractéristiques du moule de soufflage (3).

12. Procédé de transformation de récipients en matière plastique, comprenant les étapes suivantes :
- amenée d'une préforme en matière plastique dans un moule de soufflage ;
- expansion de la préforme en matière plastique à l'intérieur du moule de soufflage en exploitant des paramètres de processus définis ;
- extraction du récipient en matière plastique transformé hors du moule de soufflage ;
où, par lecture d'un support d'information du moule de soufflage, au moins une propriété caractéristique pour un paramètre géométrique du récipient à transformer avec le moule de soufflage est déterminée,
**caractérisé en ce que**
au moyen d'au moins un dispositif de capteur (22), au moins une valeur caractéristique pour les préformes à transformer est détectée, et **en ce qu'**au moyen d'une unité de mémoire, une pluralité de processus différenciés pour la transformation des récipients en matière plastique est associée à une pluralité de types de préformes et de moules de soufflage (3), pour que la connaissance d'un moule défini et d'une préforme en matière plastique définie permette la sélection et l'utilisation d'un processus exactement défini
